# EUROPEAN PATENT SPECIFICATION

(11) **EP 3 558 002 B1**
(45) Date of publication and mention of the grant of the patent: **19.01.2022**
(21) Application number: 17800785.2
(22) Date of filing: 08.11.2017
(51) Int. Cl.: A01N 59/16, A01N 31/08, A01N 31/04, A01P 1/00, A01N 25/08

(54) **AN ANTIMICROBIAL COMPOSITION COMPRISING OLIGODYNAMIC METAL**
ANTIMIKROBIELLE ZUSAMMENSETZUNG MIT OLIGODYNAMISCH WIRKENDEM METALL
COMPOSITION ANTIMICROBIENNE COMPRENANT UN MÉTAL OLIGODYNAMIQUE

(30) Priority: 20.12.2016 EP 16205207
(43) Date of publication of application: 30.10.2019
(73) Proprietor: Unilever Global IP Limited, Wirral, CH62 AZD (GB); Unilever IP Holdings B.V., 3013 AL Rotterdam (NL)
(72) Inventor: CHAKRABORTTY, Amit, Bangalore 560037 (IN); MITRA, Rupak, Bangalore 560066 (IN); MUKHERJEE, Sayandip, Bangalore 560066 (IN); SARKAR, Samarpita, Bangalore 560066 (IN)
(74) Representative: Fijnvandraat, Arnoldus
(86) International application number: PCT/EP2017/078601
(87) International publication number: WO 2018/114121

(56) References cited:
- WO-A1-2012/076310
- WO-A1-2014/170186
- WO-A1-2016/020168
- WO-A2-00/00166

## Description

### Field of the invention

The present invention relates to antimicrobial compositions containing an oligodynamic metal. In particular, the invention relates to personal wash compositions for rapidly sanitising animate as well as inanimate surfaces.

### Background of the invention

There is an ever-growing demand for antimicrobial cleansing compositions like personal wash products such as soap bars, body wash compositions and hand wash compositions. Antimicrobial cleansing compositions containing oligodynamic metal like silver, copper or zinc are effective against a variety of bacteria. Silver is most widely used.

WO2010/046238 A1 (Unilever) discloses an antimicrobial personal care compositions containing thymol and terpineol.

WO2016020168 A1 (Unilever) discloses the preparation of antimicrobial metal nanoparticles immobilised in an inorganic porous material as well as personal care compositions which contain these particles. The antimicrobial particulate composition comprises 0.05 to 3 wt% antimicrobial metal particles and the balance is the inorganic carrier.

WO2012/076310 A1 (Unilever) discloses an oral care composition comprising (i) 0.05 to 10% of an antimicrobial essential oil comprising thymol and terpineol, such that the composition comprises 0.01 to 5% by weight thymol, and 0.01 to 5% by weight terpineol; (ii) 0.01 to 10% of a zinc salt; and (iii) an orally acceptable base.

WO2014/170186 A1 (Unilever) discloses a method of cleansing human skin employing an aqueous soap composition comprising of fatty acid soap, at least one silver (I) compound having a silver ion solubility (in water at 25 °C) of at least 1 × 10-4 mol/L, and water, which composition provides biocidal activity against Gram postive bacteria in particular S. aureus, in relatively short contact periods.

However, consumers are demanding more and more efficacious products that are sustainable.

### Summary of the invention

It has been determined that a composition, more particularly a soap bar, personal wash composition comprising an oligodynamic metal and at least one of thymol or terpineol shows significant antibacterial activity. The metal needs to be in the form of a composite particulate material in which the metal is embedded in a water-insoluble inorganic carrier such as calcium carbonate.

Presence of the oligodynamic metal in this form permits the formulation of compositions containing significantly low amount of oligodynamic metal. Usually such metals are included at amounts which are of the order of ppm (parts per million). However, it is still desirable to formulate compositions which comprise as little of such metals as possible. The expression 'as little as possible' is contextual because in the case of personal wash compositions which are applied on human skin, the metal content needs to be literally as little as possible but on the other hand there are compositions for sanitising inanimate surfaces like table tops and tiles in which more amount of the metal (in actual terms) might be permissible and desirable, therefore even slight reduction vis-a-vis conventional products, while keeping the actual metal content high enough for effective sanitisation, can still be regarded as desirable. The surprising effect is that notwithstanding the reduced amount of the oligodynamic metal, compositions in accordance with this invention provide rapid sanitising action which is usually measured and reported in terms of log reduction of bacteria. Such action has been observed, especially in the case of personal wash compositions, particularly soap bars.

In accordance with a first aspect is disclosed a composition as claimed in claim 1.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

All references to the terms wt% or % by weight shall be construed as referring to the % of the concerned ingredient by weight of the composition, unless indicated to the contrary.

### Detailed description of the invention

Although a good number of antibacterial sanitising compositions are commercially available and some are reported in literature, there is need of more efficacious products due to the advent of bacterial resistance and the emergence of newer strains of virulent microorganisms.

Silver is known for its oligodynamic action. This action is the ability of little amount of certain metals to exert lethal effect on bacterial cells. The metals and some of their compounds have the ability to alter and kill the cells of microorganisms in a characteristic way. Oligodynamic metals, such as silver and copper have long been used to disinfectant and sanitise a variety of surfaces but the homecare and personal care compositions would top the list.

By a personal cleaning composition as used herein, is meant to include a composition for cleaning and disinfecting topical areas e.g. skin and/or hair of mammals, especially humans. Such a composition can be classified as leave-on or rinse off, and includes any product applied to a human body for also improving appearance, cleansing, odor control or general aesthetics. More preferably it is a rinse-off product.

"Skin" as used herein is meant to include skin on the face and body (e.g., neck, chest, back, arms, underarms, hands, legs, buttocks and scalp). The composition of the invention is also of relevance to applications on any other keratinous substrates of the human body other than skin e.g. hair where products may be formulated with specific aim of providing disinfection and cleaning.

### The compositions in accordance with the invention

In accordance with a first aspect is disclosed a soap bar composition comprising:
(i) a composite antimicrobial particulate material comprising an oligodynamic metal embedded in a water-insoluble inorganic carrier; and,
(ii) thymol and terpineol;
   wherein thymol is present in 0.01 to 0.05 wt%;
   wherein terpineol is present in 0.01 to 0.05 wt%;
   wherein the composition comprises at least 10% by weight soap of C₈ to C₂₂ fatty acids; and
   wherein said composition is a personal wash composition.

### The composite antimicrobial particulate material

It is preferred that the inorganic carrier is at least one of titanium oxide, magnesium oxide, aluminium oxide, silicon oxide, calcium oxide, barium oxide, calcium hydroxyapatite, calcium carbonate, calcium magnesium carbonate, sheet silicate, zeolite, clay or bentonite. More preferably the inorganic carrier is composed of aggregates of nano plate like structures having width of 20 to 100 nm, preferably 40 to 60 nm. Further preferably the inorganic carrier is a porous material have a nano or micro-structured assembly. It is preferred that particle size of the inorganic carrier is 1 to 10 µm.

A particularly preferred inorganic carrier is calcium carbonate. Other preferred carriers are titanium oxide, magnesium hydroxide and zinc oxide.

Preferably the amount of oligodynamic metal comprised in the antimicrobial particulate material is from 0.1 to 10 wt% by weight of the particulate material. In such a case, the balance, more or less, is composed of the inorganic carrier. Suitable process conditions and stoichiometric amount of starting materials need to be employed to ensure that the antimicrobial particulate contains 0.1 to 10 wt% oligodynamic metal by weight of the particulate material. The process steps and conditions disclosed in WO16020168 A1 (Unilever) could be, and preferably are used to prepare the composite antimicrobial particulate material.

The process for preparing a composite antimicrobial particulate material comprises the following steps:
An aqueous dispersion of a water-insoluble inorganic carrier of particle size in the range of 1 to 10 µm is prepared. The dispersion contains 1 to 5 wt% (by weight of the dispersion) of the carrier.

Separately, an aqueous solution of a reducing agent is prepared. The concentration of the reducing agent in the solution is 10 to 30 wt%.

The dispersion and the solution are mixed. Thereafter, this mix is heated to 70 °C to 90 °C. At this stage, a water soluble salt of the oligodynamic metal is added to the heated mix.

Preferably, the reducing agent is sodium acetate, sodium oxalate, trisodium citrate or disodium ethylene diamine tetra acetate.

It is particularly preferred that the oligodynamic metal is copper or silver, further more particularly it is silver. Gold is also an alternative but is less preferred in view of its price. It is preferred that the compositions in accordance with this invention comprise an amount of the composite antimicrobial particulate equivalent to 0.001 to 2 wt% of the oligodynamic metal. For example, if it is desired that the composition should contain 0.5 wt% silver (= 0.5 g silver in 100 g of the composition), then an amount of the composite particulate material which contains 0.5 g silver is included in the composition. This amount could vary depending on the solvent content in the particulate material.

Silver is particularly preferred. In the ionic form it may exist as a salt or any compound in any applicable oxidation state. It is preferred that compositions in accordance with this invention comprise an amount of the composite antimicrobial particulate equivalent to 0.001 to 2 wt% of the oligodynamic metal. Where the metal is present in the form of a compound such as silver in the form of silver acetate; then an appropriate amount of the compound is included so that the active metal content is within the broad and preferred ranges as already indicated.

It is preferred that the metal, e.g. silver is present in the form of a compound, e.g. silver (I) compound but may also be in the form of particles, e.g. nanoparticles of silver.

Silver (I) compounds are one or more water-soluble silver(I) compounds having silver ion solubility at least 1.0 ×10^{"4} mol/L (in water at 25 degrees C). Silver ion solubility, as referred to herein, is a value derived from a solubility product (Ksp) in water at 25 degrees centigrade, a well known parameter that is reported in numerous sources. More particularly, silver ion solubility [Ag+], a value given in mol/L may be calculated using the formula: [Ag+] = (Ksp · x)^{(1/(x+1))}, wherein Ksp is the solubility product of the compound of interest in water at 25 degrees centigrade, and x represents the number of moles of silver ion per mole of compound. It has been found that Silver(I) compounds having a silver ion solubility of at least 1 × 10^{"4} mol/L in are suitable for use herein. Silver ion solubility values for a variety of silver compounds are given in Table 1:

**TABLE 1**

| Silver Compound | X | Ksp /(mol/L in water at 25 °C) | Silver Ion Solubility [Ag+] (mol/L in water at 25 °C). |
|---|---|---|---|
| Silver nitrate | 1 | 51.6 | 7.2 |
| Silver acetate | 1 | 2.0 × 10⁻³ | 4.5 × 10⁻² |
| Silver sulfate | 2 | 1.4 × 10⁻⁵ | 3.0 × 10⁻² |
| Silver benzoate | 1 | 2.5 × 10⁻⁵ | 5.0 × 10⁻³ |
| Silver salicylate | 1 | 1.5 × 10⁻⁵ | 3.9 × 10⁻³ |
| Silver carbonate | 2 | 8.5 × 10⁻¹² | 2.6 × 10⁻⁴ |
| Silver citrate | 3 | 2.5 × 10⁻¹⁶ | 1.7 × 10⁻⁴ |
| Silver oxide | 1 | 2.1 × 10⁻⁸ | 1.4 × 10⁻⁴ |
| Silver phosphate | 3 | 8.9 × 10⁻¹⁷ | 1.3 × 10⁻⁴ |
| Silver chloride | 1 | 1.8 × 10⁻¹⁰ | 1.3 × 10⁻⁵ |
| Silver bromide | 1 | 5.3 × 10⁻¹³ | 7.3 × 10⁻⁷ |
| Silver iodide | 1 | 8.3 × 10⁻¹⁷ | 9.1 × 10⁻⁹ |
| Silver sulfide | 2 | 8.0 × 10⁻⁵¹ | 2.5 × 10⁻¹⁷ |

It is preferred that when silver is present in the form of a compound, the compound selected from silver oxide, silver nitrate, silver acetate, silver sulfate, silver benzoate, silver salicylate, silver carbonate, silver citrate or silver phosphate. In particularly preferred compositions the silver(I) compound is silver oxide.

### Thymol/Terpineol

In addition to the composite antimicrobial particulate material, the compositions in accordance with the invention comprise thymol and terpineol.

It is preferred that the compositions in accordance with this invention comprise thymol and terpineol, i.e. the two in combination. In such cases, it is preferred that the w/w ratio of the amount of thymol to that of terpineol is 1:0.1 to 1:10. More preferably the ratio is 1:0.5 to 1:2.

The amount of thymol is 0.01 to 0.05 wt%. Thymol is efficacious at lower dosages therefore higher dosages may be used only if necessary.

A drawback of thymol is its odour which may appear unpleasant to some individuals but such higher dosages may be used in compositions where sensorial aspects are not important or in the case of the compositions which permit the inclusion of suitable odour masking agents. It is preferred that the thymol is used in purified form. As an alternative to thymol, use may be made of thyme oil or thyme extract comprising thymol, while ensuring that sufficient/desired amount of thymol is present in it. Thyme oil or thyme extract is obtained from the thyme plant. Thyme plant refers to a plant belonging be genus Thymus and includes but is not limited to the following species: *Thymus vulgaris, Thymus zygis, Thymus satureoides, Thymus mastichina, Thymus broussonetti, Thymus maroccanus, Thymus pallidus, Thymus algeriensis, Thymus serpyllum, Thymus pulegoide,* and *Thymus citriodorus.* The isomer of thymol (carvacrol) may also be used. Alternatively, but less preferably, any derivative of thymol which has similar properties of thymol may also preferably be used.

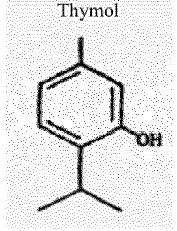

In addition to thymol, the compositions in accordance with this invention comprise terpineol. The amount of terpineol is 0.01 to 0.05 wt%. Terpineol is efficacious at lower dosages therefore higher dosages may be used only if necessary.

A drawback of terpineol, like thymol, is its odour which may appear unpleasant to some individuals but such higher dosages may be used in compositions where sensorial aspects are not important or in the case of the compositions which permit the inclusion of suitable odour masking agents. It is preferred that the terpineol is used in purified form.

The structure of a terpineol is given below:

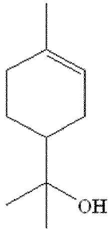

Alternatively, but less preferably, pine oil comprising desired amount of terpineol may be used instead of purified terpineol.

Oligodynamic metals, especially silver, are able to act largely due to its ability to affect the permeability of bacterial membranes and generate reactive oxygen species. Silver ions are considered as the active species. Therefore, if sufficient number of such ions are generated quickly and efficiently, it is possible to bring about rapid reduction in the viable bacterial count of surfaces which are contaminated therewith.

The oligodynamic metal, e.g. silver embedded in the inorganic carrier together with thymol (or terpineol or both) provides faster-acting antibacterial effect whilst permitting significant reduction in oligodynamic metal content that would otherwise have been necessary. The compositions in accordance with this invention are effective against at least one of Gram-positive and Gram-negative bacteria. More preferred compositions provide broad-spectrum antibacterial action which means action against Gram-positive and Gram-negative bacteria.

Without wishing to be bound by theory, it is believed that the inorganic carrier ensures the release of efficacious amount of ions of the oligodynamic metal. Such ions, together with at least one of thymol and terpineol, and preferably the two together; interact synergistically to provide 1 to 5 log reduction in bacterial count of an animate or inanimate surface at a contact time of 10 to 30 seconds.

### Use of the composition and method

In accordance with a second aspect is disclosed the use of a composition according to the first aspect for sanitising an animate or inanimate surface by reducing bacterial count of at least one Gram-positive or Gram-negative bacterium on said surface by 1 to 5 log within a contact time of 10 to 30 seconds.

The term "log reduction" as used herein means a 10-fold or 90 percent reduction in the number of viable microorganisms. By "2 log" reduction it is meant that the number of viable bacteria is reduced by 9.9 percent. By "4 log" reduction it is meant that the number of viable bacteria is reduced by 99.99 percent.

It is preferred that the Gram-positive bacteria is S. *aureus.* It is preferred that the Gram-negative bacteria is *E. coli.* In one aspect the use is non-therapeutic in nature. In another aspect it is therapeutic in nature. The differences are within the knowledge of persons skilled in the art.

In accordance with a third aspect is disclosed a non-therapeutic method of sanitising an animate or inanimate surface by reducing bacterial count of at least one Gram-positive or Gram-negative bacterium on said surface by 1 to 5 log within a contact time of 10 to 30 seconds, by contacting the surface with a composition according to the first aspect.

It is preferred that the Gram-positive bacteria is S. *aureus.* It is preferred that the Gram-negative bacteria is *E. coli.* In one aspect the use is non-therapeutic in nature. In another aspect it is therapeutic in nature. The differences are within the knowledge of persons skilled in the art. In general, therapy implies any treatment which is designed to cure, alleviate, remove or lessen the symptoms of, or prevent or reduce the possibility of contracting any disorder or malfunction of the body. In the case of compositions which are cosmetic, such as soap and shampoos, the term non-therapeutic means cosmetic use or method.

The term animate surface means any surface of a living animal, especially a mammal and more particularly of human beings. Examples include skin, scalp, teeth and hair. The term inanimate surface includes non-living surfaces such table tops, tiles, flooring, wooden, ceramic or plastic surfaces.

### Details of the compositions in accordance with the invention

The soap bar compositions are personal care compositions or personal cleansing compositions.

The soap bar cosmetic compositions are of the wash off or rinse off type, which as the name suggests, means those compositions that need to be washed off with water.

Cosmetic compositions may preferably comprise 0.1 to 5% by weight of Niacinamide or its derivatives thereof. Apart from niacinamide, other well known skin lightening agents e.g. aloe extract, ammonium lactate, arbutin, azelaic acid and kojic acid could be included.

Additionally, the compositions could comprise a sunscreen. Any sunscreen that can be included in the base may be included. Both, UVA and UVB sunscreens are preferred. Preservatives could also be included in the compositions to protect them from potentially harmful microorganisms. Suitable traditional preservatives for compositions of this invention are alkyl esters of para-hydroxybenzoic acid. Other preservatives which have more recently come into use include hydantoin derivatives, propionate salts, and a variety of quaternary ammonium compounds.

A variety of other optional materials could further be included into the compositions. These may include: antimicrobials such as 2-hydroxy-4,2',4'-trichlorodiphenylether (triclosan), 2,6-dimethyl-4-hydroxychlorobenzene, and 3,4,4'-trichlorocarbanilide; scrub and exfoliating particles such as polyethylene and silica or alumina; cooling agents such as menthol; skin calming agents such as aloe vera; and colourants.

In addition, the compositions may further include opacifiers and pearlizers such as ethylene glycol distearate, titanium dioxide or Lytron^{®} 621 (Styrene/Acrylate copolymer); all of which are useful in enhancing the appearance or properties of the product.

The compositions of the present invention can comprise a wide range of other optional components. The CTFA Personal care Ingredient Handbook, Second Edition, 1992, describes a wide variety of non-limiting personal care and pharmaceutical ingredients commonly used in the skin care industry.

### Surfactants

Personal cleansing compositions may contain a base of one or more surfactants for basic cleansing action. The surfactant may be of any class such as anionic, cationic, non-ionic, amphoteric or zwitterionic and it can be chosen according to the end use. Anionic surfactants are the most preferred as they provide good cleansing action and they are often used in variety of cleansing compositions. The anionic surfactants may be soap-based ones which are sodium/potassium salts of long chain fatty acids. Preferred cleansing compositions contain 5 to 85 wt% surfactant, more preferably 10 to 70 wt % surfactant. The type and total surfactant content will depend on the intended purpose of the composition, for example, as the composition is bar of soap then it will predominately contain soap of fatty acids (alkali metal salts of fatty acids). Where is a mild cleansing bar, it will predominately contain fatty acyl isethionate surfactant.

Usually the composition will contain a mixture of different types of surfactants. The anionic surfactant may be, for example, an aliphatic sulfonate, such as a primary alkane (e.g. C8-C22) sulfonate, primary alkane (e.g., C8-C22) disulfonate, C8-C22 alkene sulfonate, C8-C22 hydroxyalkane sulfonate or alkyl glyceryl ether sulfonate (AGS); or an aromatic sulfonate such as alkyl benzene sulfonate. Alpha olefin sulfonates are also suitable as anionic surfactants. The anionic may also be an alkyl sulfate (e.g., C12-C18 alkyl sulfate), especially a primary alcohol sulfate or an alkyl ether sulfate (including alkyl glyceryl ether sulfates). The anionic surfactant can also be a sulfonated fatty acid such as alpha sulfonated tallow fatty acid, a sulfonated fatty acid ester such as alpha sulfonated methyl tallowate or mixtures thereof. The anionic surfactant may also be alkyl sulfosuccinates (including mono- and dialkyl, e.g., C6-C22 sulfosuccinates); alkyl and acyl taurates, alkyl and acyl sarcosinates, sulfoacetates, C8-C22 alkyl phosphates and phosphates, alkyl phosphate esters and alkoxyl alkyl phosphate esters, acyl lactates or lactylates, C8-C2, monoalkyl succinates and maleates, sulphoacetates, and acyl isethionates. Another class of anionic surfactants is C8 to C20 alkyl ethoxy (1 to 20 EO) carboxylates. Yet another suitable class of anionic surfactant is C8-C18 acyl isethionates. These esters are prepared by reacting alkali metal isethionates with mixed aliphatic fatty acids having from 6 to 18 carbon atoms and an iodine value of less than 20. At least 75 percent of the mixed fatty acids have from 12 to 18 carbon atoms and up to 25 percent have from 6 to 10 carbon atoms. The acyl isethionate may also be alkoxylated isethionates. The alkyl ether sulphates, alkyl ether sulphosuccinates, alkyl ether phosphates and alkyl ether carboxylic acids and salts thereof may contain from 1 to 20 ethylene oxide or propylene oxide units per molecule

The soap bar composition of the present invention is a personal wash composition. Bars are generally meant for bodywash.

The wash composition comprises at least 10 % by weight soap of C₈ to C₂₂ fatty acids.

These formats contain a major proportion of fatty acid soap as the anionic surfactant.

The term "fatty acid soap" or, more simply, "soap" is used here in its popular sense. Reference to fatty acid soaps is to the fatty acid in neutralized form. Preferably the fatty acid from which the soap is derived is substantially completely neutralized in forming the fatty acid soap, that is say at least 95 percent, more particularly at least 98 percent, of the fatty acid groups thereof have been neutralized. The term "soap" is used herein to mean an alkali metal or alkanol ammonium salts of aliphatic, alkane-, or alkene monocarboxylic acids usually derived from natural triglycerides. Sodium, potassium, magnesium, mono-, di- and tri-ethanol ammonium cations, or combinations thereof, are the most suitable. Usually a blend of fatty acids is used from which blend of fatty acid soaps is prepared. The term "soap" refers to Sodium, Potassium, Magnesium, mono-, di- and tri-ethanol ammonium cation or combinations thereof. In general, Sodium soaps are used in the compositions of this invention, but up to 15 percent of the soap content may be some other soap forms such as Potassium, Magnesium or triethanolamine soaps.

Detailed account of soaps and other surfactants which may be used can be found in "Surface Active Agents and Detergents" (Vol. I and II) by Schwartz, Perry and Berch.

### Manufacture of soap bars

Soap bars/tablets can be prepared using manufacturing techniques described in the literature and known in the art for the manufacture of soap bars. Examples of the types of manufacturing processes available are given in the book Soap Technology for the 1990's (Edited by Luis Spitz, American Oil Chemist Society Champaign, Illinois. 1990). These broadly include: melt forming, extrusion/stamping, and extrusion, tempering, and cutting.

The invention will now be explained in details with reference to the following non-limiting examples.

### Examples

### Example 1

Some soap bars were prepared by standard ploughshare mix route. The compositions were coded to differentiate them based on their formulations.

Soap compositions A and B (refer TABLE 3) were outside the scope of the invention. Soap composition 1 was as per the invention. Only one composition contained antimicrobial particulate material. The formulations did not differ from each other insofar as all other ingredients and their % by weight were concerned.

The composite antimicrobial particulate material was prepared as follows:
100 g of porous calcium carbonate (immobiliser) was prepared by mixing 147 g of calcium chloride with 106 g sodium carbonate under constant stirring at 10 °C for five hours. The slurry was aged for five hours, filtered, washed with deionised water and air-dried.

400 mg of porous calcium carbonate so prepared was dispersed in 10 ml water and mixed with 4 ml of 1 wt% aqueous solution of trisodium citrate. The mixture was heated to 80 °C followed by addition of freshly prepared 0.25 ml of 2% silver nitrate. This mixture was stirred for 20 minutes at 300 rpm. The mixture was filtered to separate the particles which were air dried. The process led to a composite antimicrobial particulate material containing calcium carbonate and silver in metallic form (as nanoparticles) in which silver was embedded in the calcium carbonate acting as a carrier. The size of nanoparticles of silver was 5 to 50 nm.

These particles were included in the soap composition1. For comparative analysis, soap bars containing silver-DTPA were prepared. These compositions did not contain the antimicrobial particles which were present in composition 1. Compositions of all soap bars (falling within and falling outside the scope of the present invention) is shown in Table 2:

**TABLE 2**

| Ingredients/wt% | Soap composition A | Soap composition B | Soap composition 1 (inside the present invention) |
|---|---|---|---|
| | (Outside the present invention) | | |
| Anhydrous soap (sodium palmate and Sodium palm kernelate | 70.0 | 70.0 | 70.0 |
| Alpha olefin sulphonate sodium salt | 1.0 | 1.0 | 1.0 |
| Glycerin | 6.0 | 6.0 | 6.0 |
| Talc | 6.0 | 6.0 | 6.0 |
| Thymol | 0.01 | 0.0175 | 0.0175 |
| Terpineol | 0.025 | 0.0175 | 0.0175 |
| Silver salt of DTPA* | 0.0005 | 0.0005 | ---- |
| Particulate material made as described above | 0 | 0 | 0.0001** |
| Water and other minors | Up to 100.0 | Up to 100.0 | Up to 100.0 |

- Note 1:: DTPA means diethylene triamine penta acetic acid
- Note 2:: (*) each bar of soap contained 5 ppm silver (which is equal to 0.0005 wt% actual silver, based on total weight of each bar)
- Note 3:: (**) each bar of soap contained 1 ppm silver (which is equal to 0.0001 wt% actual silver, based on total weight of each bar)

### The procedure:

A working test solution (aqueous) of each composition was prepared immediately before use. The tests were carried out in duplicate in order to minimise procedural/human errors.

The soap bar was finely grated across its length to get about 24 g of the grated shavings. A sample test solution (8 w/v aqueous) was prepared from the grated shavings using sterile water. The grated shavings were allowed to dissolve completely in the water by warming the solution to facilitate dissolution.

Thereafter, 10 ml aliquots of the working test solution was dispensed into separate sterile -50 mL vials, and each vial was kept in a water bath maintained at 40 °C for five minutes.

Sterile tubes containing Tryptic Soy Broth were inoculated from lyophilized vials containing *E.coli* and *S*. *aureus.* The cultures were incubated at 35 ± 2 °C for 23 + 1 hour. Broth cultures were inoculated onto the surface of Tryptic Soy Agar contained in petri plates and incubated at 35 ± 2 °C for 23 ± 1 hour. This led to lawns of each bacteria on the surface of the solid media, and growth from them were used to prepare the challenge suspensions. Purity of each broth culture was verified by preparing isolation streaks on Tryptic Soy Agar and incubating at 35 ± 2 °C.

20 ml vials, each containing 10 ml of the product test solution was used for testing.

The contents of each vial was stirred in a water bath maintained at 40 ± 1 °C. A 0.1 ml aliquot of the challenge suspension was transferred to each vial containing the test solution (10⁰ dilution), and was mixed with it. The challenge suspension was exposed to the product test solution at 40 ± 1 °C (30 seconds, timed using a calibrated minute/second timer. The calibrated minute/second timer was started within ± 1 second of addition of the challenge suspension. Upon elapse of the exposure time(s), a 1.0 mL aliquot was transferred from the vial containing the product test solution/challenge suspension to a test tube containing 9.0 ml of D/E or Butterfield's, with neutralizer (10⁻¹ dilution) and mixed in a vortex mixer. Additional ten-fold dilution (e.g., 10⁻², 10⁻³, and 10⁻⁴) were prepared in D/E or Butterfield's with neutralizer mixing thoroughly using a suitable mixer. Duplicate 1.0 ml and/or 0.1 mL aliquots were pourplated using TSA with neutralisers, resulting in final plated dilutions of, e.g., 10⁻¹, 10⁻², 10⁻³, 10⁻⁴, and 10⁻⁵. The plates were incubated at 35 ± 2 °C for approximately 24 hours, or until sufficient growth was observed. Three replicates of the procedures described in above were performed each using independently prepared challenge suspensions and product test solutions.

Following the incubation, the colonies on the plates were counted. Counts in the range of 30 to 300 CFU were used preferentially to calculate the data. If no counts in this range were observed, those plates with colony counts closest to this range were used.

Table 3 contains a summary of the observations.

**TABLE 3**

| Average log reduction along with the observed standard deduction | Soap composition A | Soap composition B | Soap composition 1 |
|---|---|---|---|
| | *S*. *aureus* | | |
| At 10 seconds | 0.67 ± 0.44 | 1.20 ± 0.34 | 1.54 ± 0.40 |
| At 30 seconds | 2.55 ± 0.42 | 2.82 ± 0.38 | 3.28 ± 0.55 |
| | *E. coli* | | |
| At 10 seconds | 1.13 ± 0.37 | 1.02 ± 0.32 | 1.32 ± 0.34 |
| At 30 seconds | > 5 | > 5 | > 5 |

The data in Table 3 indicates the following:
The soap composition 1 shows superior performance compared to compositions A and B.

At the end of 10 seconds, composition 1 caused significantly more reduction (statistically significant) of S. *aureus* as well as *E. coli.* This despite the fact that composition 1 effectively contained just one-fifth the amount of silver as compared to composition A as well as B (refer Table 2).

On the other hand, at 30 seconds, the extent of log reduction of S. *aureus* offered by composition 1 is significantly more than the reduction caused by the compositions devoid of the composite antimicrobial particulate material.

While in the case of *E*. *coli* it may be observed that even the compositions outside the scope of the invention bring about more than 5 log reduction in viable count of the bacterium, the important difference is that the Composition 1 contains just 1/5 the amount of silver as compared to Compositions A and B.

## Claims

1. A soap bar composition comprising:
(i) a composite antimicrobial particulate material comprising an oligodynamic metal embedded in a water-insoluble inorganic carrier; and,
(ii) thymol and terpineol;
wherein thymol is present in 0.01 to 0.05 wt%;
wherein terpineol is present in 0.01 to 0.05 wt%;
wherein the composition comprises at least 10% by weight soap of C₈ to C₂₂ fatty acids; and
wherein said composition is a personal wash composition.

2. A composition as claimed in claim 1 wherein said inorganic carrier is at least one of titanium oxide, magnesium oxide, aluminium oxide, silicon oxide, calcium oxide, barium oxide, calcium hydroxyapatite, calcium carbonate, calcium magnesium carbonate, sheet silicate, zeolite, clay or bentonite.

3. A composition as claimed in claim 2 wherein said inorganic carrier is calcium carbonate.

4. A composition as claimed in any of claims 1 to 3 wherein amount of oligodynamic metal in said antimicrobial particulate material is from 0.1 % to 10 % by weight of said particulate material.

5. A composition as claimed in any of claims 1 to 4 wherein said oligodynamic metal is copper or silver.

6. A composition as claimed in claim any one of the preceding claims wherein w/w ratio of the amount of said thymol to that of said terpineol is 1:0.5 to 1:2.

7. A composition as claimed in any of claims 1 to 6 wherein said composition comprises an amount of said composite antimicrobial particulate equivalent to 0.00005 to 2 wt% of said oligodynamic metal.

8. Use of a composition as claimed in any of claims 1 to 7 for sanitising an animate or inanimate surface by reducing bacterial count of at least one Gram-positive or Gram-negative bacterium on said surface by 1 to 5 log within a contact time of 10 to 30 seconds, wherein said use is non-therapeutic.

9. A non-therapeutic method of sanitising an animate or inanimate surface by reducing bacterial count of at least one Gram-positive or Gram-negative bacterium on said surface by 1 to 5 log within a contact time of 10 to 30 seconds, by contacting said surface with a composition as claimed in any of claims 1 to 7.

## Patentansprüche

1. Seifenstückzusammensetzung, umfassend:
(i) ein antimikrobielles teilchenförmiges Verbundmaterial, umfassend ein oligodynamisches Metall, eingebettet in einen wasserunlöslichen anorganischen Träger; und
(ii) Thymol und Terpineol;
worin Thymol in 0,01 bis 0,05 Gew.-% vorliegt;
worin Terpineol in 0,01 bis 0,05 Gew.-% vorliegt;
wobei die Zusammensetzung mindestens 10 Gewichts-% Seife von C₈- bis C₂₂-Fettsäuren umfasst; und
wobei die Zusammensetzung eine Körperwaschzusammensetzung ist.

2. Zusammensetzung, wie im Anspruch 1 beansprucht, wobei der anorganische Träger mindestens einer von Titanoxid, Magnesiumoxid, Aluminiumoxid, Siliziumoxid, Calciumoxid, Bariumoxid, Calciumhydroxyapatit, Calciumcarbonat, Calciummagnesiumcarbonat, Schichtsilikat, Zeolith, Ton oder Bentonit ist.

3. Zusammensetzung, wie im Anspruch 2 beansprucht, wobei der anorganische Träger Calciumcarbonat ist.

4. Zusammensetzung, wie in irgendeinem der Ansprüche 1 bis 3 beansprucht, wobei die Menge des oligodynamischen Metalls in dem antimikrobiellen teilchenförmigen Material 0,1 bis 10 Gewichts-% des teilchenförmigen Materials beträgt.

5. Zusammensetzung, wie in irgendeinem der Ansprüche 1 bis 4 beansprucht, wobei das oligodynamische Material Kupfer oder Silber ist.

6. Zusammensetzung, wie in irgendeinem der vorhergehenden Ansprüche beansprucht, wobei das Gew./Gew.-Verhältnis der Menge des Thymols zu der des Terpineols 1:0,5 bis 1:2 beträgt.

7. Zusammensetzung, wie in irgendeinem der Ansprüche 1 bis 6 beansprucht, wobei die Zusammensetzung eine Menge des antimikrobiellen teilchenförmigen Verbunds äquivalent zu 0,00005 bis 2 Gew.-% des oligodynamischen Metalls umfasst.

8. Verwendung einer Zusammensetzung, wie in irgendeinem der Ansprüche 1 bis 7 beansprucht, zum Desinfizieren einer belebten oder unbelebten Oberfläche durch Verringern der Keimzahl von mindestens einem grampositiven oder gramnegativen Bakterium auf der Oberfläche um 1 bis 5 log innerhalb einer Kontaktzeit von 10 bis 30 Sekunden, wobei die Verwendung nicht-therapeutisch ist.

9. Nicht-therapeutisches Verfahren zum Desinfizieren einer belebten oder unbelebten Oberfläche durch Verringern der Keimzahl von mindestens einem grampositiven oder gramnegativen Bakterium auf der Oberfläche um 1 bis 5 log innerhalb einer Kontaktzeit von 10 bis 30 Sekunden durch Inkontaktbringen der Oberfläche mit einer Zusammensetzung, wie in einem der Ansprüche 1 bis 7 beansprucht.

## Revendications

1. Composition de pain de savon comprenant :
(i) un matériau particulaire antimicrobien composite comprenant un métal oligodynamique incorporé dans un support inorganique insoluble dans l'eau ; et,
(ii) du thymol et terpinéol ;
dans laquelle le thymol est présent dans de 0,01 à 0,05 % en masse ;
dans laquelle le terpinéol est présent dans de 0,01 à 0,05 % en masse ;
dans laquelle la composition comprend au moins 10 % en masse de savon d'acides gras en C₈ à C₂₂ ; et
dans laquelle ladite composition est une composition pour le lavage de la personne.

2. Composition selon la revendication 1, dans laquelle ledit support inorganique est au moins un d'oxyde de titane, oxyde de magnésium, oxyde d'aluminium, oxyde de silicium, oxyde de calcium, oxyde de baryum, hydroxyapatite de calcium, carbonate de calcium, carbonate de calcium magnésium, silicate lamellaire, zéolite, argile ou bentonite.

3. Composition selon la revendication 2, dans laquelle ledit support inorganique est le carbonate de calcium.

4. Composition selon l'une quelconque des revendications 1 à 3, dans laquelle la quantité de métal oligodynamique dans ledit matériau particulaire antimicrobien est de 0,1 % à 10 % en masse dudit matériau particulaire.

5. Composition selon l'une quelconque des revendications 1 à 4, dans laquelle ledit métal oligodynamique est du cuivre ou de l'argent.

6. Composition selon l'une quelconque des revendications précédentes, dans laquelle le rapport masse/masse de la quantité dudit thymol à celle dudit terpinéol est de 1:0,5 à 1:2.

7. Composition selon l'une quelconque des revendications 1 à 6, dans laquelle ladite composition comprend une quantité dudit matériau particulaire antimicrobien composite équivalente à de 0,00005 à 2 % en masse dudit métal oligodynamique.

8. Utilisation d'une composition selon l'une quelconque des revendications 1 à 7 pour désinfecter une surface animée ou inanimée en réduisant le nombre de bactéries d'au moins une bactérie Gram-positive ou Gram-négative sur ladite surface de 1 à 5 log dans un temps de contact de 10 à 30 secondes, dans laquelle ladite utilisation est non-thérapeutique.

9. Procédé non-thérapeutique de désinfection d'une surface animée ou inanimée en réduisant le nombre de bactéries d'au moins une bactérie Gram-positive ou Gram-négative sur ladite surface de 1 à 5 log dans un temps de contact de 10 à 30 secondes, par mise en contact de ladite surface avec une composition selon l'une quelconque des revendications 1 à 7.
